# EUROPEAN PATENT APPLICATION

(11) **EP 4 807 617 A1**
(43) Date of publication of application: **16.09.2026**
(21) Application number: 25226135.9
(22) Date of filing: 22.12.2025
(51) Int. Cl.: G06F 40/35, G06F 40/56, G06N 5/02

(54) **METHOD AND SYSTEM FOR LARGE LANGUAGE MODEL BASED PERSONA SPECIFIC RESPONSE QUERY GENERATION**

(30) Priority: 11.03.2025 IN 202521021802
(71) Applicant: Tata Consultancy Services Limited, Maharashtra (IN)
(72) Inventor: DASGUPTA, Tirthankar, 700160 Kolkata, West Bengal (IN); SINHA, Manjira, 700160 Kolkata, West Bengal (IN); SAHA, Diya, 700160 Kolkata, West Bengal (IN); AGRAWAL, Sumeet, 400096 Mumbai, Maharashtra (IN); JADHAV, Charudatta, 400096 Mumbai, Maharashtra (IN); VELLAYARAJ, Shreedhar, 600096 Chennai, Tamil Nadu (IN)
(74) Representative: Goddar, Heinz J.

(57) **Abstract**

The ability to generate contextually relevant multimodal answers based on proprietary knowledge base is critical for enhancing user experience in interactive systems. Conventional approaches fails in generating precise, multimodal responses. The present disclosure provides a system and method for persona-specific, recursive clarification in Large Language Model (LLM)-driven query response generation. The system enhances the LLM's interaction process by generating tailored clarification questions based on a Multi-layer hierarchical relational graph (MHRG) that profiles user intent and maps domain-specific knowledge relationships. By iteratively refining and clarifying the user's question, the system generates a user's intent profile that optimizes the retrieval and response process, enabling the LLM to better address complex or ambiguous queries. This framework ensures that each interaction dynamically adapts to the user's intent and persona, improving interpretive accuracy and engagement.

## Description

### CROSS-REFERENCE TO RELATED APPLICATIONS AND PRIORITY

The present application claims priority to Indian application no. 202521021802 filed on March 11, 2025.

### TECHNICAL FIELD

The disclosure herein generally relates to the field of machine learning and, more particularly, to a method and system for large language model based persona specific response query generation.

### BACKGROUND

In interactive systems like virtual assistants, customer support bots, and educational platforms, effective communication depends on the system's capacity to interpret ambiguous user queries and user-bot interaction by posing relevant clarifying questions. Most of the conventional systems, however, either depend on generic question templates or lack the sophistication to ask meaningful follow-up questions, resulting in miscommunication and lower user satisfaction.

In the era of Generative Artificial Intelligence (GenAI), where most models are Large Language Model (LLM) based with a fixed cost per token generated (e.g., models like Generative Pre-training Transformer). This limitation not only impacts user experience but also drives up token costs without yielding proportional benefits to users. Knowledge graph based methods can serve better. However, existing knowledge graphs typically treat nodes as entities and edges as relations, necessitating complex relational extraction techniques that constrain their applicability in general domains. This leads to generating follow-up queries which requires focusing on entities linked by relationships such as "is a subset of", "is part of", "includes" and "contains". Hence there is a challenge in generating accurate responses for input queries in interactive systems.

### SUMMARY

Embodiments of the present disclosure present technological improvements as solutions to one or more of the above-mentioned technical problems recognized by the inventors in conventional systems. For example, in one embodiment, a method for large language model based persona specific response query generation is provided. The method includes receiving, by one or more hardware processors, an input query from a user, wherein the input query comprises a plurality of information requirements associated with the user. Further, the method includes extracting, by the one or more hardware processors, a plurality of entities and an associated plurality of relationships pertaining to the input query using a query processor. Furthermore, the method includes identifying, by the one or more hardware processors, a user intent based on the input query, the extracted plurality of entities and the associated plurality of relationships by traversing a Multi-Relational Hierarchical Graph (MRHG), wherein the MRHG is created based on a knowledge repository. Furthermore, the method includes identifying, by the one or more hardware processors, a persona associated with the input query based on the identified user intent using an intent-persona mapping technique. Furthermore, the method includes generating, by the one or more hardware processors, a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph. Furthermore, the method includes obtaining, by the one or more hardware processors, a matched information by comparing the query sub-graph with the MRHG. Furthermore, the method includes generating, by the one or more hardware processors, a plurality of follow-up queries based on the matched information using a pretrained query encoder. Furthermore, the method includes ranking, by the one or more hardware processors, the generated plurality of follow-up queries using a Reinforcement Learning (RL) based trained encoder model. Furthermore, the method includes updating, by the one or more hardware processors, the ranked plurality of follow-up queries in the user intent graph, wherein a weight associated with each of the plurality of follow-up queries is associated with the generated rank. Furthermore, the method includes identifying, by the one or more hardware processors, a completeness of the user intent graph by checking whether all nodes of the user intent graph are connected to each other, wherein the above steps are repeated until one of (i) the user intent graph is complete and (ii) a predefined number of iterations are completed. Furthermore, the method includes generating, by the one or more hardware processors, a reformatted personalized user query associated with the input user query based on the user intent graph using a trained transformer architecture based language model. Finally, the method includes generating, by the one or more hardware processors, a multi-modal response for the reformatted personalized user query based on the user intent graph using the query response generator.

In another aspect, a system for large language model based persona specific response query generation is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input query from a user, wherein the input query comprises a plurality of information requirements associated with the user. Further, the one or more hardware processors are configured by the programmed instructions to extract a plurality of entities and an associated plurality of relationships pertaining to the input query using a query processor. Furthermore, the one or more hardware processors are configured by the programmed instructions to identify a user intent based on the input query, the extracted plurality of entities and the associated plurality of relationships by traversing a Multi-Relational Hierarchical Graph (MRHG), wherein the MRHG is created based on a knowledge repository. Furthermore, the one or more hardware processors are configured by the programmed instructions to identify a persona associated with the input query based on the identified user intent using an intent-persona mapping technique. Furthermore, the one or more hardware processors are configured by the programmed instructions to generate a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph. Furthermore, the one or more hardware processors are configured by the programmed instructions to obtain a matched information by comparing the query sub-graph with the MRHG. Furthermore, the one or more hardware processors are configured by the programmed instructions to generate a plurality of follow-up queries based on the matched information using a pretrained query encoder. Furthermore, the one or more hardware processors are configured by the programmed instructions to rank the generated plurality of follow-up queries using a Reinforcement Learning (RL) based trained encoder model. Furthermore, the one or more hardware processors are configured by the programmed instructions to update the ranked plurality of follow-up queries in the user intent graph, wherein a weight associated with each of the plurality of follow-up queries is associated with the generated rank. Furthermore, the one or more hardware processors are configured by the programmed instructions to identify a completeness of the user intent graph by checking whether all nodes of the user intent graph are connected to each other, wherein the above steps are repeated until one of (i) the user intent graph is complete and (ii) a predefined number of iterations are completed. Furthermore, the one or more hardware processors are configured by the programmed instructions to generate a reformatted personalized user query associated with the input user query based on the user intent graph using a trained transformer architecture based language model. Finally, the one or more hardware processors are configured by the programmed instructions to generate a multi-modal response for the reformatted personalized user query based on the user intent graph using the query response generator.

In yet another aspect, a computer program product including a non-transitory computer-readable medium embodied therein a computer program for large language model based persona specific response query generation is provided. The computer readable program, when executed on a computing device, causes the computing device to receive an input query from a user, wherein the input query comprises a plurality of information requirements associated with the user. Further, the computer readable program, when executed on a computing device, causes the computing device to extract a plurality of entities and an associated plurality of relationships pertaining to the input query using a query processor. Furthermore, the computer readable program, when executed on a computing device, causes the computing device to identify a user intent based on the input query, the extracted plurality of entities and the associated plurality of relationships by traversing a Multi-Relational Hierarchical Graph (MRHG), wherein the MRHG is created based on a knowledge repository. Furthermore, the computer readable program, when executed on a computing device, causes the computing device to identify a persona associated with the input query based on the identified user intent using an intent-persona mapping technique. Furthermore, the computer readable program, when executed on a computing device, causes the computing device to generate a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph. Furthermore, the computer readable program, when executed on a computing device, causes the computing device to obtain a matched information by comparing the query sub-graph with the MRHG. Furthermore, the computer readable program, when executed on a computing device, causes the computing device to generate a plurality of follow-up queries based on the matched information using a pretrained query encoder. Furthermore, the computer readable program, when executed on a computing device, causes the computing device to rank the generated plurality of follow-up queries using a Reinforcement Learning (RL) based trained encoder model. Furthermore, the computer readable program, when executed on a computing device, causes the computing device to update the ranked plurality of follow-up queries in the user intent graph, wherein a weight associated with each of the plurality of follow-up queries are associated with the generated rank. Furthermore, the computer readable program, when executed on a computing device, causes the computing device to identify a completeness of the user intent graph by checking whether all nodes of the user intent graph are connected to each other, wherein the above steps are repeated until one of (i) the user intent graph is complete and (ii) a predefined number of iterations are completed. Furthermore, the computer readable program, when executed on a computing device, causes the computing device to generate a reformatted personalized user query associated with the input user query based on the user intent graph using a trained transformer architecture based language model. Finally, the computer readable program, when executed on a computing device, causes the computing device to generate a multi-modal response for the reformatted personalized user query based on the user intent graph using the query response generator.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for large language model based persona specific response query generation, in accordance with some embodiments of the present disclosure.
FIG. 1B illustrates overall modular architecture of the system for the large language model based persona specific response query generation, in accordance with some embodiments of the present disclosure.
FIG. 2A and, FIG. 2B (collectively referred to as FIG. 2) illustrate a flow diagram for a processor implemented method for large language model based persona specific response query generation, in accordance with some embodiments of the present disclosure.
FIG. 3 illustrates a Domain-Specific Multi-layer Multi-Relational Hierarchical Graph (MHRG) for the processor implemented method for large language model based persona specific response query generation, in accordance with some embodiments of the present disclosure.
FIG. 4 illustrates a subgraph for the processor implemented method for large language model based persona specific response query generation, in accordance with some embodiments of the present disclosure.
FIG. 5 illustrates an example user intent graph for the processor implemented method for large language model based persona specific response query generation, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The ability to generate contextually relevant multimodal (text, numerical, images etc.,) answers based on proprietary knowledge base is critical for enhancing user experience in interactive systems. By improving the system's understanding of user intent and context, the effectiveness of communication can be significantly increased, leading to better outcomes in various applications, including customer service, education, and information retrieval. As organizations increasingly adopt Artificial Intelligence (AI) driven solutions, the demand for sophisticated clarification capabilities is on continuous rise, making the present disclosure essential for maintaining competitive advantage and ensuring user satisfaction.

Conventional approaches typically rely on generic question-answering templates and fixed rule-based follow-up questions for clarification, which often fail to incorporate domain-specific knowledge. This results in responses that are either too broad or irrelevant, impeding effective dialogue. The lack of precise, multimodal responses not only reduces user satisfaction but also constrains the system's ability to deliver accurate and meaningful assistance. Further, the conventional approaches often overlook domain-specific knowledge, resulting in responses that are either irrelevant or overly general, hindering effective dialogue. This shortfall in precise, multimodal responses not only diminishes user satisfaction but also limits the system's potential to provide accurate and valuable assistance.

To overcome the said challenges, embodiments herein provide a method and system for large language model based persona specific response query generation. The objective of the present disclosure tackles the inefficiency of existing question/query-answering systems in producing contextually relevant, unambiguous multimodal answers and clarification questions tailored to user-specific persona and intent profiles within a proprietary knowledge base. Further, the present disclosure addresses the inefficiency of existing question/query-answering systems in generating contextually relevant, unambiguous multimodal answers and clarification questions tailored to user-specific persona and intent profiles within a proprietary knowledge base.

The present disclosure initially involves extracting the Document Object Model (DOM) tree of the given repository and then creating the knowledge graph known as Multi-Relational Hierarchical Graph (MRHG) based on hyperlinked content. Further, the present disclosure receives user query as input and tries to identify persona out of it. If the persona is identified, then an associated response is generated by a query response generator. If the persona is not identified, then subsequent follow-up queries are generated based on the MRHG and using trained encoders until the present disclosure is able to identify the persona thus generating accurate response to the input user query.

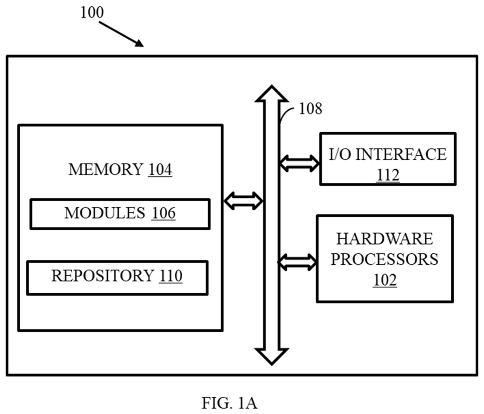

Referring now to the drawings, more particularly to FIG. 1A through FIG. 5, where similar reference characters denote corresponding features consistently throughout the figures, there are shown preferred embodiments, and these embodiments are described in the context of the following exemplary system and/or method.

FIG. 1A is a functional block diagram of system 100 for large language model based persona specific response query generation, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and Dynamic Random Access Memory (DRAM), and/or nonvolatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Large language model based persona specific response query generation. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for LLM based persona specific response query generation.

The data repository (or repository) 110 may include a plurality of abstracted pieces of code for refinement and data that is processed, received, or generated as a result of the execution of the plurality of modules in the module(s) 106.

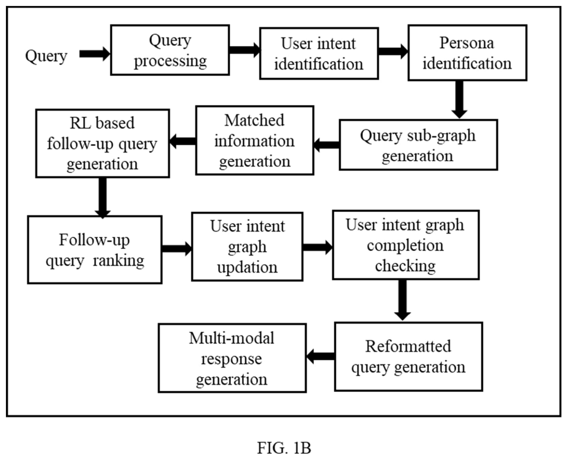

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS). The overall modular architecture of the system of FIG. 1A is illustrated in FIG. 1B.

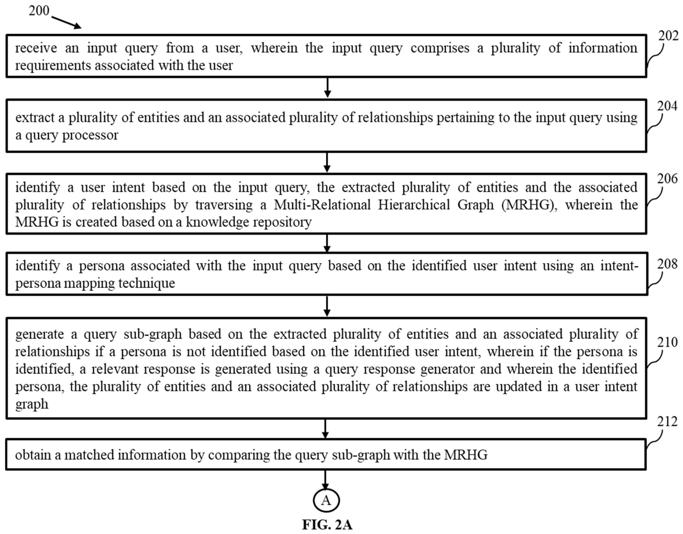

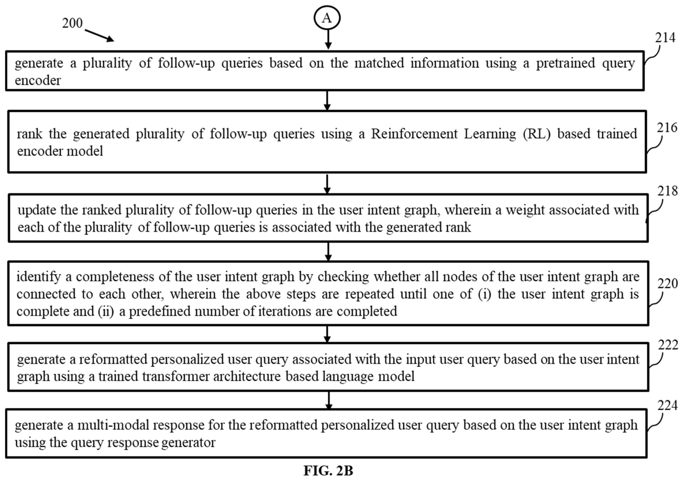

FIGS. 2A and 2B (collectively referred to as FIG. 2) is an exemplary flow diagram illustrating a method 200 for large language model based persona specific response query generation implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which steps of the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, the one or more hardware processors 102 are configured by the programmed instructions to receive an input query from a user, wherein the input query includes a plurality of information requirements associated with the user. For example, the input query looks like, *"What are the methods for making non-text content accessible?",*

At step 204 of the method 200, the one or more hardware processors 102 are configured by the programmed instructions to extract a plurality of entities and an associated plurality of relationships pertaining to the input query using a query processor. For example, considering the query *"What are the methods for making non-text content accessible?",* the plurality of entities identified are {"methods", "non-text content", "accessible"} and the associated plurality of relationships in triplet form are {methods, aims to make, non-text content accessible}, {Accessibility, serves purpose of, improving usability for all} and {Non-text content, is relevant to, diverse personas}.

At step 206 of the method 200, the one or more hardware processors 102 are configured by the programmed instructions to identify a user intent based on the input query, the extracted plurality of entities and the associated plurality of relationships by traversing a Multi-Relational Hierarchical Graph (MRHG). For example, considering the *"What are the methods for making non-text content accessible? ",* based on the extracted plurality of entities and the associated plurality of relationships described in step 204, the user intent identified is *"Enhance accessibility for diverse audiences".* For example, the traversal made in the MRHG for intent identification is given below:
(Methods) -- aim to make --> (Non-text content accessible)
|-- (Accessibility) -- serves purpose of --> (Improving usability for all)
-- (Non-text content) -- is relevant to --> (Diverse personas)

The steps of generating MRHG based on a knowledge repository is explained as follows: Initially, the knowledge repository comprising a plurality of documents pertaining to a plurality of domains is received. Further, a Document Object Model (DOM) tree is extracted based on the repository. The DOM tree is a hierarchical representation of a Hyper Text Markup Language (HTML) or Extensible Markup Language (XML) document. The DOM tree includes a root node representing a document itself, and a plurality of child nodes representing a plurality of elements, attributes, and text content of the document, and wherein the extracted DOM is further expanded by prompting a transformer architecture based language model. In some embodiments, large language models like, LLAMA 3.1 8B and Mistral 7B parameters are used for prompting. Further, the MRHG is created based on the extracted DOM tree and a plurality of hyperlinked content.

The steps for creating the MRHG based on the extracted DOM tree and a plurality of hyperlinked content is explained as follows: Initially, the DOM associated with the repository is received. Further, a plurality of entity-relationship triplets is generated by extracting a plurality of entities and an associated plurality of relationships pertaining to the repository using a Large Language Model (LLM). Post generating the plurality of entity-relationship triplets, the MRHG comprising the plurality of entities as nodes and the associated plurality of relationships as edges is generated based on the generated plurality of triplets using a graph construction technique. The MRHG is a bidirectional weighted graph capable of traversing in both top-down and bottom-up, wherein a weight associated with each of a plurality of edges of the MRHG are computed based on frequency of occurrences of an associated edge.

For example, initially a number of edges in the MRHG are identified. Each edge connects two nodes and may represent different types of relationships. The weight calculation for edges in MRHG can vary based on the specific context and goals of the analysis. In an embodiment, the present disclosure utilizes a formula that normalizes the frequency of occurrences. For example, if w(e) is the weight of edge e and *f*(*e*) is the frequency of edge e for the given entities in the set of extracted entity relation triplets. Then, weight, *w*(*e*) *=* (*f*(*e*)/*N*)*,* where N is the total number of edges in the graph. This normalizes the weight between 0 and 1.

The transformer architecture based language model is prompted using a plurality of prompting strategies comprising (i) expanding specific subtrees within the context of the given repository and (ii) suggesting new types for integration into the most appropriate subtree. This approach facilitated a dynamic evolution of ontology, achieving both broad coverage and detailed categorization. The flexibility to incorporate additional subtrees into the ontology further enhanced its comprehensiveness, ensuring that it was both expansive and finely tuned to the specific needs of our project. After extracting the entities, the entity sets were cleaned with help of human annotators who are domain experts. Human experts compare the LLM-extracted entities with the existing DOM-tree and populate the base knowledge graph following Algorithm 1. Now referring to algorithm 1, the final *KG* gives the insights present in the textual content as well as the ontology structure of the repository. So *KG* can be described as the MRHG which later helps to generate follow-up questions for a given user query.

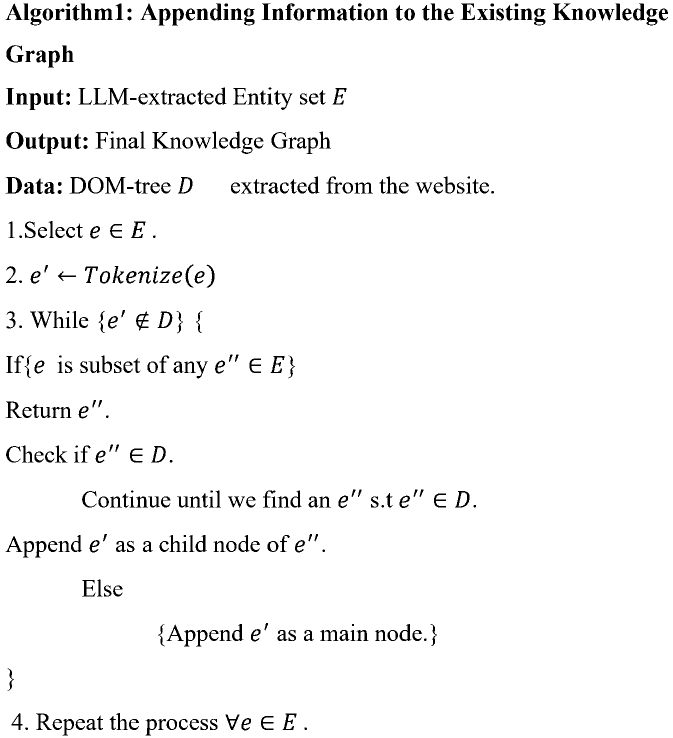

### 5.Return the completed knowledge graph KG.

For example, the MRHG is organized into layered hierarchical structure, wherein semantic, causal, temporal and hierarchical relationship associated with the dynamic knowledge graph are obtained using relational mapping. Furthermore, the MRHG includes a plurality of intents named as goals and associated actionable implementations named as purposes. For example,
- **Layer 1 (Goals):** Represents the fundamental question: *What is the concept about?* This layer maps the essence or objective of each concept.
- **Layer 2 (Purpose):** Explores the facets of *Why, How, and For Whom* the concept is used. This layer incorporates:
   i. **Why:** Motivations or drivers behind the concept's existence or utilization.
   ii. **How:** The methodologies, processes, or mechanisms associated with the concept.
   iii. **For Whom:** Stakeholders, users, or entities benefiting from the concept.

The **Goal-Purpose Interconnections** are a critical innovation in the MHRG, bridging abstract intents (*Goals*) with their actionable implementations (*Purposes*)*.* These interconnections are explicitly represented as directed, weighted, and semantically rich relationships between nodes in the graph (MRHG). They form a bidirectional framework, enabling both top-down decomposition of goals into purposes and bottom-up reasoning to trace purposes back to their overarching goals.

Each edge is assigned a weight to quantify: (i) The relevance of the purpose to the goal and (ii) The priority or importance of the connection in the context of the domain. Weights can be dynamically adjusted based on new data, feedback, or contextual factors. Edges are enriched with metadata to provide additional context:
∘ **Temporal Constraints:** When the purpose is relevant or applicable.
∘ **Stakeholder Information:** Who is impacted or involved.
∘ **Implementation Contexts:** Where and how the purpose can be enacted.

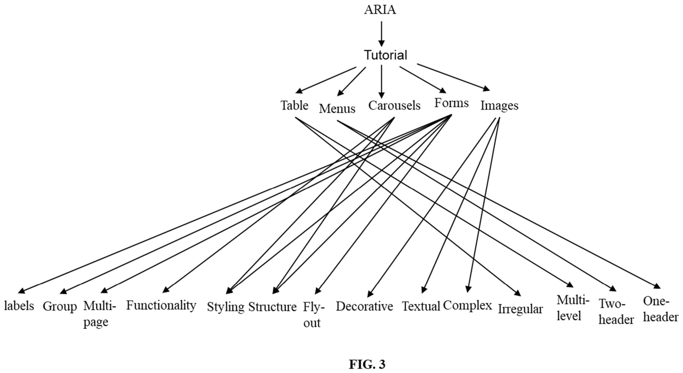

FIG. 3 illustrates an example MRHG which shows a subset of the DOM-Tree retrieved from Web Accessibility Initiative-Accessible Rich Internet Applications (WAI-ARIA) Tutorial. Then content of each page is given as context to Generative Pretraining Transformer-4 (GPT-4) and instruct GPT to extract entities and relationship from the context. GPT is prompted to focus on the relationships containing "subset of", "is part of", "contains", "includes", etc. After extracting the entities, we clean the entity set with help of human annotators who are Accessibility experts. Human experts compare the LLM-extracted entities with the existing DOM-tree and populate the base knowledge graph following Algorithm 1. The final MRHG (part of the final multi-layer relational knowledge graph is given as example in Table 1) gives us the insights present in the textual content as well as the ontology structure of the repository.

**Table 1**

| **Source** | **Target** | **Relation** |
|---|---|---|
| Non-text content | Images | Part of |
| Images | Informative Images | Subset of |
| Images | Background Images | Subset of |
| Images | Text Images | Part of |
| Non-text content | Audio & Video Media | Is part of |
| Audio & Video Media | Captions/ Subtitles | Can be expressed |
| Audio & Video Media | Transcripts | Can be expressed |
| Alternate description for the image | Minimum/Maximum length of alternate text | Is part of |

At step 208 of the method 200, the one or more hardware processors 102 are configured by the programmed instructions to identify a persona associated with the input query based on the identified user intent using an intent-persona mapping technique. For example, the identified user intent is mapped with a plurality of predefined personas and a matching persona is obtained.

For example, considering the query, *"What are the methods for making non-text content accessible? ",* extracted triplets were: {Methods, aim to make, Non-text content accessible}, {Accessibility, serves purpose of, improving usability for all}. Now the central focus is: methods for making accessible content. As per the predefined set, this particular aim has been mostly associated with objectives of a Developer. So, the user intent is mapped with developer persona.

As from the question the end goal of the user is quite clear, the system do not generate any follow-up question on the aim but try to clarify on which type of non-text content the user wants to make accessible. So, while profiling the intent the system expands an user intent graph on that direction.

At step 210 of the method 200, the one or more hardware processors 102 are configured by the programmed instructions to generate a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph.

For example, based on the example query, *"What are the methods for making non-text content accessible?",* the query is simple, and the present disclosure detects the user persona as a *"content creator*/*software program developer".*

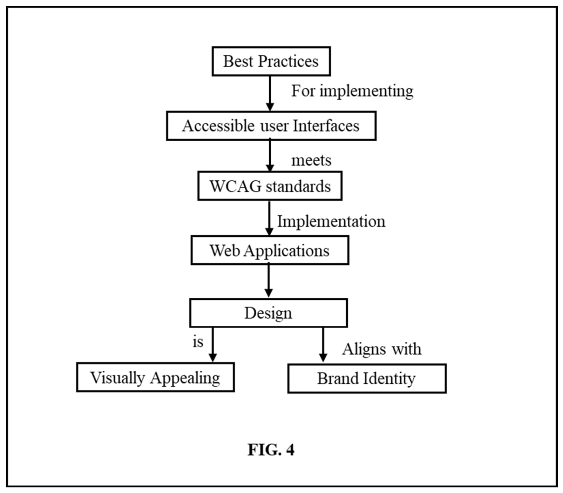

For example, considering the example query *"What are the best practices for implementing an accessible user interface that meets WCAG standards in my web application, while also ensuring that the design is visually appealing and aligns with our brand identity?",* the query is complex, and the system 100 is unable to identify the persona. Hence a query sub-graph is generated for the said complex query as given in FIG. 4.

At step 212 of the method 200, the one or more hardware processors 102 are configured by the programmed instructions to obtain a matched information by comparing the query sub-graph with the MRHG. For example, the matched information in the form of triplets for the example complex query given in step 210 looks like are given below:
- (sufficient contrast, ensures, text legibility)
- (design, should accommodate, different viewport sizes)
- (responsive design, enhances, accessibility)
- (text size, needs to be, adjustable)
- (images, must include, alternative text)
- (navigation, should be, keyboard accessible)
- (color usage, should not rely solely on, color distinction)
- (content layout, must support, screen readers)
- (form elements, should have, clear labels)
- (accessible design, aligns with, brand identity)

At step 214 of the method 200, the one or more hardware processors 102 are configured by the programmed instructions to generate a plurality of follow-up queries based on the matched information using a pretrained query encoder. For example, the follow up queries for the example complex query given in step 210 are given below:
- Are you interested in ensuring your design choices adhere to WCAG standards without sacrificing the overall user experience?
- What adjustments can I make to improve color contrast without compromising my brand identity?
- Are you interested in learning the accessibility requirement related to contrast ratio for text content?
- Are you interested in learning the accessibility requirement related to contrast ratio for non-text content?

At step 216 of the method 200, the one or more hardware processors 102 is configured by the programmed instructions to rank the generated plurality of follow-up queries using a Reinforcement Learning (RL) based trained encoder model.

For example, RL based trained encoder model (pre-trained T5 model) is used for ranking the generated plurality of follow-up queries. Initially, the pre-trained T5 model which can generate follow-up questions is loaded based on the retrieved entities and train the model through Reinforcement Learning. AdamW optimizer is used to update the model parameters, and the learning rate is set as e⁻⁵. The training and ranked follow-up question generation process of the RL agent is shown in Algorithm 2. Here, all-mpnet-base-v2 model from the Sentence Transformers library is used to create the embedding for a sentence. This model maps each sentence to 768-dimensional vector space. Cosine similarity is used to calculate the Reward and Loss function. In this architecture, the goal is to generate follow-up questions that are semantically relevant to the original question. The cosine similarity score of equation (1) provides a quantitative measure of this relevance by determining how closely aligned the vector representations of the two questions are. $Cosine similarity \left({v}_{q}, {v}_{f}\right) = ξ = \frac{{v}_{q}^{T} ⋅ {v}_{f}}{\left‖{v}_{q}\right‖ \left‖{v}_{f}\right‖}$

The cosine similarity score inherently ranges between -1 and 1, but since the embeddings of related sentences usually have positive cosine similarity, we have normalized this score to fit within the desired range of 0 to 1 for the reward function. So, the Reward function between the embeddings of user query *v_{q}* and generated follow-up question *v_{fᵢ}* becomes as shown in equation (2): ${R}_{i} \left({v}_{q}, {v}_{{f}_{i}}\right) = \frac{1}{1 + {e}^{- κξ}}$ Here, κ is set as 10.

At step 218 of the method 200, the one or more hardware processors 102 is configured by the programmed instructions to update the ranked plurality of follow-up queries in the user intent graph, wherein a weight associated with each of the plurality of follow-up queries is associated with the generated rank. Table I illustrates some of the example follow-up queries corresponding to the complex query *"What are the best practices for implementing an accessible user interface that meets WCAG standards in my web application, while also ensuring that the design is visually appealing and aligns with our brand identity?"* and associated rewards generated by the RL based trained encoder model. Similarly, Table II illustrates top ranking follow-up queries created for the complex query.

**Table I**

| **Sl. No** | **Follow-up query** | **Reward** |
|---|---|---|
| 1. | *What are the accessibility requirement related to use of color* | 0.44153496623039246 |
| 2. | *What are the accessibility requirement related to contrast ration for non-text content* | 0.33387070894241333 |
| 3. | *What are the accessibility requirement related to contrast ration for text content* | 0.34038421511650085 |
| 4. | *Naming of the content on the page* | 0.01363727729767561 |
| 5. | *"What are the accessibility requirement related to use of color* | 0.44153496623039246 |
| 6. | *What are the accessibility requirement related to contrast ration for non-text content* | 0.33387070894241333 |
| 7. | *What are the accessibility requirement related to contrast ration for text content* | 0.34038421511650085 |
| 8. | *Are you interested in ensuring your design choices adhere to WCAG standards without sacrificing the overall user experience?* | 0.424038421511650085 |

**Table II**

| **Sl. No** | **Follow-up query** | **Rank** |
|---|---|---|
| 1. | *Are you interested in ensuring your design choices adhere to WCAG standards without sacrificing the overall user experience?* | 0.74153496623039246 |
| 2. | *What adjustments can I make to improve color contrast without compromising my brand identity?* | 0.64038421511650085 |
| 3. | *What are the accessibility requirement related to contrast ration for text content* | 0.33387070894241333 |

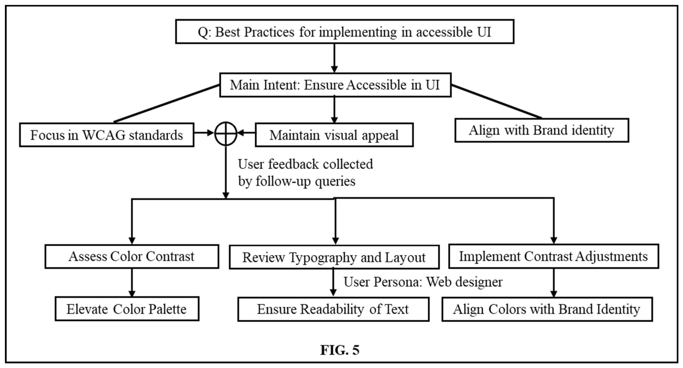

For example, the user intent graph for the complex query given in step 210 is illustrated in FIG. 5. An example complex query use case for the present disclosure is explained as follows: The process began with the user query: *"What are the best practices for implementing an accessible user interface that meets WCAG standards in my web application, while also ensuring that the design is visually appealing and aligns with our brand identity?"* This query indicates a desire to integrate accessibility with aesthetic considerations and brand alignment.
**1. Identifying Key Themes:** From the query, key themes emerged:
   - **Accessibility:** The importance of adhering to WCAG standards.
   - **Visual Appeal:** The need for the design to be attractive.
   - **Brand Identity:** The requirement to maintain a cohesive brand image.
**2. Follow-Up Queries:** To dive deeper, several follow-up questions were generated. According to the user feedback, we focus on the question: *"What adjustments can I make to improve color contrast without compromising my brand identity? ".*
**3. User Intent Profile Graph:** A user intent profile graph was created to visually represent the user's goals and the connections between them as shown in FIG. 5. The graph included:
   - **Main Intent:** Ensure accessibility in UI.
   - **Sub-Intents:** Focus on WCAG standards, maintain visual appeal, and align with brand identity.
   - **Specific Actions:** Evaluate color contrast, review typography, and implement adjustments.
**4. Final Persona:** Based on the graph and the overall context of the user's queries, the persona of the **Brand-Conscious Web Designer** is developed:
   - **Background:** A professional involved in web design or development.
   - **Goals:** Implement accessibility while preserving aesthetics and brand identity.
   - **Challenges:** Finding a balance between accessibility requirements and brand aesthetics.
   - **Motivation:** Creating an inclusive web experience aligned with brand values and regulatory standards.

Algorithm 3 uses the Domain-Specific Hierarchical Multilayer Relational Graph (MRHG) to profile user intent by traversing paths within the graph. The profiling process is guided by relationships categorized as *Goals, Purpose and persona.* The weights assigned to each node is based on their rank in the corresponding follow-up question. This User Intent Profile graph is then sent to the Profile Completion Checker, which evaluates whether the intent profile sufficiently addresses the user query. If the profile is complete, the process moves to the Response Generation stage; if not, additional follow-up questions are generated based on the latest user feedback to ensure comprehensive profiling. Here's a detailed breakdown of the algorithm:

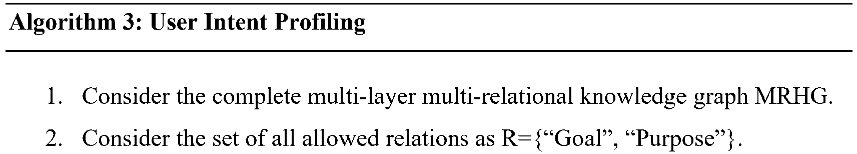

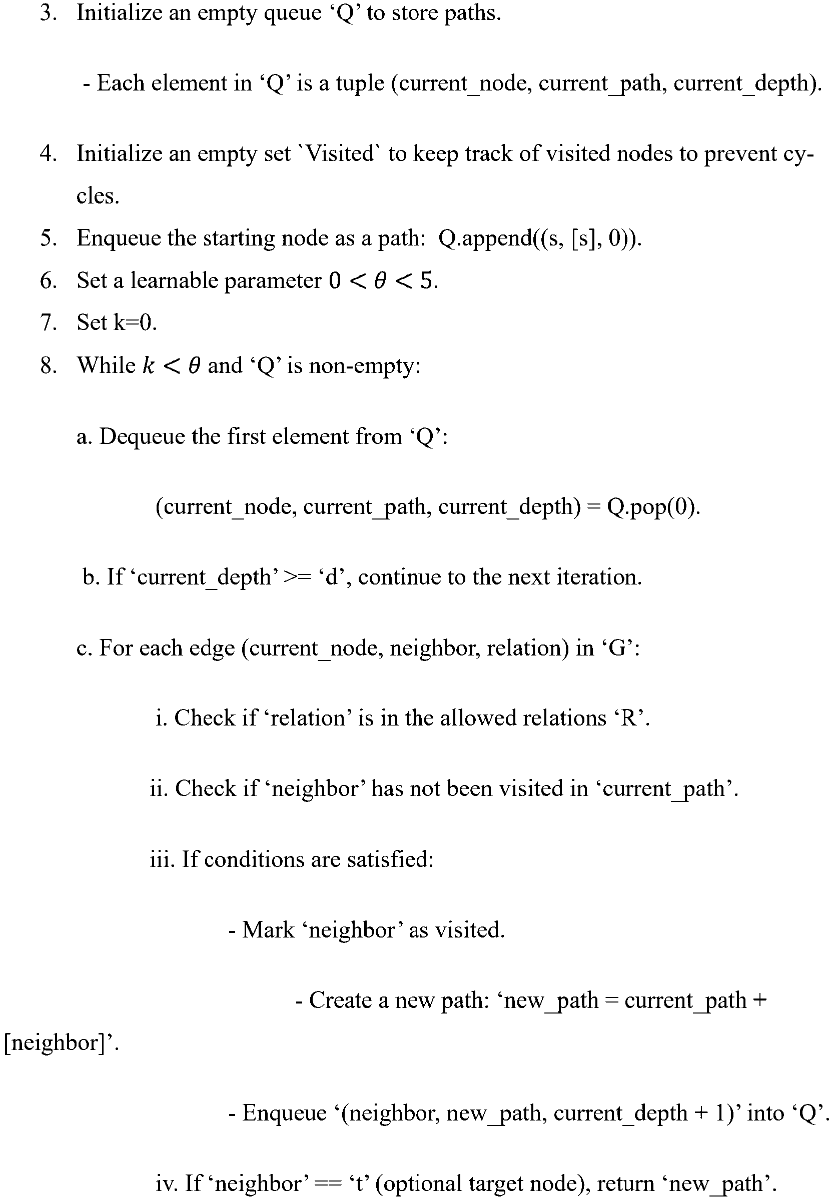

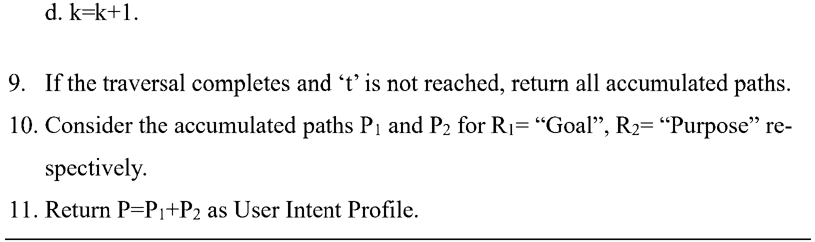

Algorithm 3 traverses a multi-layer, multi-relational knowledge graph (MHRG) to explore paths that align with specified user intent relations, namely "Goal" and "Purpose". It initializes a queue Q with the starting node, tracks visited nodes to avoid cycles and sets a depth threshold d and a learnable parameter θ, i.e., traversal limit. Iteratively, the algorithm dequeues paths from Q and, for each connected edge, checks whether the relation is allowed and the neighbor is unvisited. If conditions are met, it extends the path, enqueues the new node and path, and optionally checks if the target node t is reached, returning the path if successful. After θ iterations or when the queue is empty, the algorithm outputs all accumulated paths for each relation. Paths corresponding to "Goal" and "Purpose" are combined into a single User Intent Profile representing the user's intent based on user query and existing knowledge base.

At step 220 of the method 200, the one or more hardware processors 102 is configured by the programmed instructions to identify a completeness of the user intent graph by checking whether all nodes of the user intent graph are connected to each other, wherein the above steps are repeated until one of (i) the user intent graph is complete and (ii) a predefined number of iterations are completed. The completeness of the graph indicates whether the graph is filled in all levels.

At step 222 of the method 200, the one or more hardware processors 102 is configured by the programmed instructions to generate a reformatted personalized user query associated with the input user query based on the user intent graph using a trained transformer architecture based language models. In some embodiments, Large Language Models (LLMs) are also used to generate the reformatted personalized user query.

For example, based on the user intent and the identified persona of the Brand-Conscious Web Designer, here's a reformatted personalized user query: *"As a web designer focused on maintaining our brand identity while ensuring accessibility, what best practices can I implement to improve color contrast in my web application? I want to adhere to WCAG standards without compromising the visual appeal of our design. Could you provide specific strategies that align with our brand values? ".*

At step 224 of the method 200, the one or more hardware processors 102 is configured by the programmed instructions to generate a multi-modal response for the reformatted personalized user query based on the user intent graph using the query response generator. The multi-modal response includes textual data, numerical data and visual data. The textual data includes domain-specific terminology, definitions, and contextual usage. Numerical Data includes quantitative attributes or metrics tied to concepts. The visual Data includes diagrams, images, or schematics, to provide complementary graphical representations.

For example, the multi-modal response for the reformatted personalized user query is given as follows: Here are some best practices you can implement to improve color contrast in your web application while maintaining your brand identity and adhering to Web Content Accessibility Guidelines (WCAG) standards:

### 1. Evaluate Existing Color Combinations

**Contrast Checkers:** Use tools like WebAIM Contrast Checker to test your existing color combinations against WCAG standards.

### 2. Adjust Color Shades

Instead of changing your brand colors completely, consider adjusting their shades. For example, if your primary color is too light, you can darken it slightly to increase contrast.
/* Example of adjusting a brand color */ .brand-primary { background-color: #007bff; /* Original brand color */ background-color: #0056b3; /* Darkened for better contrast */ }

### 3. Utilize Neutrals and Accent Colors

Incorporate neutral colors (like whites, grays, or blacks) as backgrounds to create contrast. This can help highlight brand colors effectively.

/* Example using a neutral background */ .content { background-color: #f9f9f9; /* Neutral background */ color: #333; /* Dark text for better readability */ }

### 4. Typography Enhancements

Increase the font weight or size for important text elements. Ensure text stands out against the background color.

/* Example of enhancing typography */ h1 { font-size: 2rem; font-weight: bold; /* Use bold weight for emphasis */ color: #333; /* Ensure good contrast with the background */ }

### 5. Text Backgrounds

Use solid backgrounds behind text blocks to ensure readability, especially for colored text.

/* Example of text backgrounds */ highlighted-text { background-color: rgba(255, 255, 255, 0.8); /* Slightly opaque white */ color: #007bff; /* Brand color for text */ padding: 5px; }

### 6. Testing with Real Users

Conduct user testing with individuals who have diverse accessibility needs. Gather feedback to find the right balance between aesthetics and usability.

### 7. Create Accessibility Guidelines

Document your accessibility practices in your brand guidelines. This ensures that future designs align with both accessibility and brand aesthetics.

### 8. Regularly Review and Update

As design trends evolve, regularly review your color choices and make adjustments to maintain compliance with WCAG standards.

By implementing these strategies, you can enhance color contrast in your web application while preserving your brand identity. Aim for a design that is visually appealing, accessible, and true to your brand values.

**Experimentation:** The present disclosure was experimented using a Web Accessibility Bot which addresses ambiguous user queries specific to three personas, Developer, Tester, and Designer focusing on webpage construction for individuals with visual impairments. By generating contextual follow-up questions aligned with each user's persona, the bot delivers multimodal responses that include relevant HTML and ARIA-based code snippets from a knowledge base, providing tailored support for web accessibility requirements.

It was observed during experimentation that the present disclosure represents a significant advancement in the field of interactive systems by providing a structured, knowledge-based approach to generating automatic clarification questions. By leveraging a domain-specific hierarchical relational graph, the proposed framework not only improves the relevance and quality of generated questions but also enhances the overall effectiveness of user interactions. The successful implementation of this invention will position organizations to meet the evolving demands of users in an increasingly automated and information-driven world.

Metrics used for testing the present disclosure are given below:
**Relevance:** According to the Gricean Maxim of Relation, a high-quality follow-up question should be relevant to the prior discussion and aligned with the overall survey objective. Irrelevant questions provide unnecessary information and complicate the analysis. Relevance is measured by verifying if the entity identified in the generated follow-up question belongs to the context entity set using equation (3). 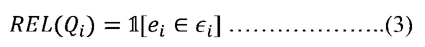
**Informativeness:** From the Gricean Maxim of Quantity, effective communication should be informative. In a knowledge graph, an entity's out-degree centrality reflects its connectivity to other entities, indicating its potential for information gain. As assessed the Informativeness of a generated follow-up question based on the out-degree centrality of the entity identified in the question is given in equation (4). $INFO \left({Q}_{i}\right) = Centrality \left({e}_{i}\right)$
**Truthfulness:** A high-quality follow-up question should always lead to truthful information. Truthfulness is measured using a follow-up question from an entity-relation perspective where the question should ask a valid relation connected to the recognized entity based on the knowledge base.
**Coherence:** Semantic Coherence of generated follow-up questions to dialogue histories by predicting the probability of each generated question conditioned on the previous QA pair using the powerful language model, BERT, whose pre-training tasks include this same objective shown in equation (5). 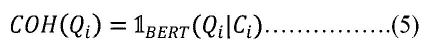
**Ambiguity:** Ambiguity is measured using entailment, where higher entailment between the generated question and the query suggests greater alignment and clarity. The present disclosure is trained using T5-small model using the Stanford Natural Language Inference (SNLI) corpus, which contains 570k human-written sentence pairs labeled for entailment, contradiction, and neutral. After training, the Ambiguity metric is calculated by counting how many generated follow-up questions are labeled as entailments of the original query, ensuring they are relevant and clarifying the user's intent.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of large language model based persona specific response query generation. The present disclosure provides the integration of persona detection, task-specific hierarchical knowledge graphs, dynamic follow-up question generation, and graph-based document retrieval represents a groundbreaking approach that is not an obvious progression from current technologies. Further, the present disclosure seamlessly merged of persona-based query processing with a User Intent Profile graph to deliver personalized, contextually enriched, and highly relevant responses. This synergy is not a straightforward adaptation of existing methodologies; instead, it involves a sophisticated interplay of advanced features that collectively elevate the performance and applicability of conversational systems. Such an advancement requires a conceptual leap, transcending the conventional paradigms of static retrieval or generic response generation to achieve a level of personalization and contextual understanding previously unattainable.

Further, the present disclosure offers several advantages. The first one is personalization. By creating detailed member personas and matching them with appropriate plans, the system provides personalized insurance options tailored to the specific needs of employees. The system is efficient in the sense that it reduces the time required to onboard employer groups by streamlining the setup process and plan configuration. Also, using a dynamic pricing model, the system allows for the adjustment of pricing based on real-time data, ensuring that insurance costs are aligned with the actual risk and resource consumption of the employee group.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), by one or more hardware processors, an input query from a user, wherein the input query comprises a plurality of information requirements associated with the user;
extracting (204), by the one or more hardware processors, a plurality of entities and an associated plurality of relationships pertaining to the input query using a query processor;
identifying (206), by the one or more hardware processors, a user intent based on the input query, the extracted plurality of entities and the associated plurality of relationships by traversing a Multi-Relational Hierarchical Graph (MRHG), wherein the MRHG is created based on a knowledge repository;
identifying (208), by the one or more hardware processors, a persona associated with the input query based on the identified user intent using an intent-persona mapping technique;
generating (210), by the one or more hardware processors, a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph;
obtaining (212), by the one or more hardware processors, a matched information by comparing the query sub-graph with the MRHG;
generating (214), by the one or more hardware processors, a plurality of follow-up queries based on the matched information using a pretrained query encoder;
ranking (216), by the one or more hardware processors, the generated plurality of follow-up queries using a Reinforcement Learning (RL) based trained encoder model;
updating (218), by the one or more hardware processors, the ranked plurality of follow-up queries in the user intent graph, wherein a weight associated with each of the plurality of follow-up queries is associated with the generated rank;
identifying (220), by the one or more hardware processors, a completeness of the user intent graph by checking whether all nodes of the user intent graph are connected to each other, wherein the above steps are repeated until one of (i) the user intent graph is complete and (ii) a predefined number of iterations are completed;
generating (222), by the one or more hardware processors, a reformatted personalized user query associated with the input user query based on the user intent graph using a trained transformer architecture based language model; and
generating (224), by the one or more hardware processors, a multi-modal response for the reformatted personalized user query based on the user intent graph using the query response generator.

2. The method as claimed in claim 1, wherein the steps of generating the MRHG based on the knowledge repository comprises:
receiving the knowledge repository comprising a plurality of documents pertaining to a plurality of domains;
extracting a Document Object Model (DOM) tree based on the repository, wherein the DOM tree is a hierarchical representation of a Hyper Text Markup Language (HTML) or Extensible Markup Language (XML) document and, wherein the DOM tree comprises a root node representing a document itself, and a plurality of child nodes representing a plurality of elements, attributes, and text content of the document, and wherein the extracted DOM is further expanded by prompting a transformer architecture based language model ; and
creating the MRHG based on the extracted DOM tree and a plurality of hyperlinked content, by:
receiving the DOM associated with the repository;
generating a plurality of entity-relationship triplets by extracting a plurality of entities and an associated plurality of relationships pertaining to the repository using a transformer architecture based language model; and
generating the MRHG comprising the plurality of entities as nodes and the associated plurality of relationships as edges based on the generated plurality of triplets using a graph construction technique, wherein the MRHG is a bidirectional weighted graph capable of traversing in both top-down and bottom-up, wherein a weight associated with each of a plurality of edges of the MRHG are computed based on frequency of occurrences of an associated edge.

3. The method as claimed in claim 2, wherein the transformer architecture based language model is prompted using a plurality of prompting strategies comprising (i) expanding specific subtrees within the context of the given repository and (ii) suggesting new types for integration into the most appropriate subtree.

4. The method as claimed in claim 2, wherein the MRHG is organized into layered hierarchical structure, wherein semantic, causal, temporal and hierarchical relationship associated with the dynamic knowledge graph are obtained using relational mapping.

5. The method as claimed in claim 2, wherein the MRHG comprises a plurality of intents named as goals and associated actionable implementations named as purposes.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive an input query from a user, wherein the input query comprises a plurality of information requirements associated with the user;
extract a plurality of entities and an associated plurality of relationships pertaining to the input query using a query processor;
identify a user intent based on the input query, the extracted plurality of entities and the associated plurality of relationships by traversing a Multi-Relational Hierarchical Graph (MRHG), wherein the MRHG is created based on a knowledge repository;
identify a persona associated with the input query based on the identified user intent using an intent-persona mapping technique;
generate a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph;
obtain a matched information by comparing the query sub-graph with the MRHG;
generate a plurality of follow-up queries based on the matched information using a pretrained query encoder;
rank the generated plurality of follow-up queries using a Reinforcement Learning (RL) based trained encoder model;
update the ranked plurality of follow-up queries in the user intent graph, wherein a weight associated with each of the plurality of follow-up queries is associated with the generated rank;
identify a completeness of the user intent graph by checking whether all nodes of the user intent graph are connected to each other, wherein the above steps are repeated until one of (i) the user intent graph is complete and (ii) a predefined number of iterations are completed;
generate a reformatted personalized user query associated with the input user query based on the user intent graph using a trained transformer architecture based language model; and
generate a multi-modal response for the reformatted personalized user query based on the user intent graph using the query response generator.

7. The system as claimed in claim 6, wherein the steps of generating the MRHG based on the knowledge repository comprises:
receiving the knowledge repository comprising a plurality of documents pertaining to a plurality of domains;
extracting a Document Object Model (DOM) tree based on the repository, wherein the DOM tree is a hierarchical representation of a Hyper Text Markup Language (HTML) or an Extensible Markup Language (XML) document and, wherein the DOM tree comprises a root node representing a document itself, and a plurality of child nodes representing a plurality of elements, attributes, and text content of the document, and wherein the extracted DOM is further expanded by prompting a transformer architecture based language model; and
creating the MRHG based on the extracted DOM tree and a plurality of hyperlinked content, by:
receiving the DOM associated with the repository;
generating a plurality of entity-relationship triplets by extracting a plurality of entities and an associated plurality of relationships pertaining to the repository using a transformer architecture based language model ; and
generating the MRHG comprising the plurality of entities as nodes and the associated plurality of relationships as edges based on the generated plurality of triplets using a graph construction technique, wherein the MRHG is a bidirectional weighted graph capable of traversing in both top-down and bottom-up, wherein a weight associated with each of a plurality of edges of the MRHG are computed based on frequency of occurrences of an associated edge.

8. The system as claimed in claim 6, wherein the transformer architecture based language model is prompted using a plurality of prompting strategies comprising (i) expanding specific subtrees within the context of the given repository and (ii) suggesting new types for integration into the most appropriate subtree.

9. The system as claimed in claim 6, wherein the MRHG is organized into layered hierarchical structure, wherein semantic, causal, temporal and hierarchical relationship associated with the dynamic knowledge graph are obtained using relational mapping.

10. The system as claimed in claim 6, wherein the MRHG comprises a plurality of intents named as goals and associated actionable implementations named as purposes.

11. One or more non-transitory machine-readable information storage mediums comprising one or more instructions which when executed by one or more hardware processors cause:
receiving an input query from a user, wherein the input query comprises a plurality of information requirements associated with the user;
extracting a plurality of entities and an associated plurality of relationships pertaining to the input query using a query processor;
identifying a user intent based on the input query, the extracted plurality of entities and the associated plurality of relationships by traversing a Multi-Relational Hierarchical Graph (MRHG), wherein the MRHG is created based on a knowledge repository;
identifying a persona associated with the input query based on the identified user intent using an intent-persona mapping technique;
generating a query sub-graph based on the extracted plurality of entities and an associated plurality of relationships if a persona is not identified based on the identified user intent, wherein if the persona is identified, a relevant response is generated using a query response generator and wherein the identified persona, the plurality of entities and an associated plurality of relationships are updated in a user intent graph;
obtaining a matched information by comparing the query sub-graph with the MRHG;
generating a plurality of follow-up queries based on the matched information using a pretrained query encoder;
ranking the generated plurality of follow-up queries using a Reinforcement Learning (RL) based trained encoder model;
updating the ranked plurality of follow-up queries in the user intent graph, wherein a weight associated with each of the plurality of follow-up queries is associated with the generated rank;
identifying a completeness of the user intent graph by checking whether all nodes of the user intent graph are connected to each other, wherein the above steps are repeated until one of (i) the user intent graph is complete and (ii) a predefined number of iterations are completed;
generating a reformatted personalized user query associated with the input user query based on the user intent graph using a trained transformer architecture based language model; and
generating a multi-modal response for the reformatted personalized user query based on the user intent graph using the query response generator.

12. The one or more non-transitory machine-readable information storage mediums as claimed in claim 11, wherein the steps of generating the MRHG based on the knowledge repository comprises:
receiving the knowledge repository comprising a plurality of documents pertaining to a plurality of domains;
extracting a Document Object Model (DOM) tree based on the repository, wherein the DOM tree is a hierarchical representation of a Hyper Text Markup Language (HTML) or an Extensible Markup Language (XML) document and, wherein the DOM tree comprises a root node representing a document itself, and a plurality of child nodes representing a plurality of elements, attributes, and text content of the document, and wherein the extracted DOM is further expanded by prompting a transformer architecture based language model; and
creating the MRHG based on the extracted DOM tree and a plurality of hyperlinked content, by:
receiving the DOM associated with the repository;
generating a plurality of entity-relationship triplets by extracting a plurality of entities and an associated plurality of relationships pertaining to the repository using a transformer architecture based language model ; and
generating the MRHG comprising the plurality of entities as nodes and the associated plurality of relationships as edges based on the generated plurality of triplets using a graph construction technique, wherein the MRHG is a bidirectional weighted graph capable of traversing in both top-down and bottom-up, wherein a weight associated with each of a plurality of edges of the MRHG are computed based on frequency of occurrences of an associated edge.

13. The one or more non-transitory machine-readable information storage mediums as claimed in claim 11, wherein the transformer architecture based language model is prompted using a plurality of prompting strategies comprising (i) expanding specific subtrees within the context of the given repository and (ii) suggesting new types for integration into the most appropriate subtree.

14. The one or more non-transitory machine-readable information storage mediums as claimed in claim 11, wherein the MRHG is organized into layered hierarchical structure, wherein semantic, causal, temporal and hierarchical relationship associated with the dynamic knowledge graph are obtained using relational mapping.

15. The one or more non-transitory machine-readable information storage mediums as claimed in claim 11, wherein the MRHG comprises a plurality of intents named as goals and associated actionable implementations named as purposes.
